# FASCICULE DE BREVET EUROPEEN

(11) **EP 3 280 616 B1**
(45) Date de publication et mention de la délivrance du brevet: **02.06.2021**
(21) Numéro de dépôt: 16722276.9
(22) Date de dépôt: 30.03.2016
(51) Int. Cl.: B60Q 1/08, B60Q 1/18

(54) **DISPOSITIF D'ÉCLAIRAGE POUR UN BLOC OPTIQUE DE VÉHICULE, À FAISCEAU LUMINEUX ASSURANT UN ÉCLAIREMENT CONSTANT D'UN OBSTACLE QUELLE QUE SOIT SA POSITION**
BELEUCHTUNGSVORRICHTUNG FÜR SEALED-BEAM-SCHEINWERFER EINES FAHRZEUGES MIT EINEM LICHTSTRAHL ZUR GEWÄHRLEISTUNG VON KONSTANTER BELEUCHTUNG EINES HINDERNISSES UNABHÄNGIG VON DESSEN POSITION
ILLUMINATION DEVICE FOR A SEALED-BEAM HEADLIGHT OF A VEHICLE, HAVING A LIGHT BEAM WHICH ENSURES CONSTANT ILLUMINATION OF AN OBSTACLE REGARDLESS OF THE POSITION THEREOF

(30) Priorité: 08.04.2015 FR 1553001
(43) Date de publication de la demande: 14.02.2018
(73) Titulaire: PSA Automobiles SA, 78300 Poissy (FR)
(72) Inventeur: GONCALVES, Whilk Marcelino, 75013 Paris (FR); STEE, Lucien, 91700 Ste Genevieve Des Bois (FR); SURUGUE, Michel, 91190 Gif Sur Yvette (FR)
(86) Numéro de dépôt international: PCT/FR2016/050710
(87) Numéro de publication internationale: WO 2016/162611

(56) Documents cités:
- EP-A1- 2 128 521
- EP-A1- 2 700 538
- WO-A1-02/04247
- FR-A1- 2 957 864

## Description

L'invention concerne les dispositifs d'éclairage qui équipent certains blocs optiques de véhicule et qui sont destinés à éclairer des obstacles détectés dans une zone située devant le véhicule.

Comme le sait l'homme de l'art, certains véhicules comprennent au moins un boc optique équipé d'un dispositif d'éclairage, parfois appelé « marking light », et comportant une source délivrant un faisceau lumineux et des moyens de contrôle agencés, en cas de détection d'un obstacle en un endroit d'une zone située devant leur véhicule, pour faire fonctionner la source de sorte qu'elle éclaire dynamiquement cet obstacle détecté. L'obstacle étant éclairé par un faisceau lumineux dédié, le conducteur dispose de plus de temps pour effectuer une manœuvre destinée à l'éviter, et donc cela permet de diminuer la probabilité d'une collision.

Le faisceau lumineux est soit projeté vers l'avant, via au moins une lentille, soit réfléchi vers l'avant par un miroir rotatif. L'obstacle est généralement détecté par analyse d'images acquises par une caméra vidéo ou infrarouge embarquée dans le véhicule ou par analyse de données acquises par un radar ou un sonar embarqué dans le véhicule.

Dans les dispositifs d'éclairage actuels le faisceau lumineux, délivré par la source, est intense et étroit (avec un angle d'éclairement (ou largeur) sensiblement fixe). Hélas, l'éclairement (ou la quantité de lumière) que reçoit l'obstacle, comme par exemple un piéton, et l'étroitesse du faisceau lumineux ne sont pas bien adaptés à toutes les situations de vie, et en particulier aux situations dans lesquelles le piéton se trouve assez proche ou assez loin du véhicule. Ainsi, le piéton peut être ébloui dans certaines circonstances et la probabilité qu'il soit détecté par le conducteur peut varier sensiblement en fonction de la distance qui le sépare du véhicule. En effet, pour que la détection du piéton soit optimisée, le dispositif doit l'éclairer dans sa largeur. Par conséquent, lorsqu'un piéton est proche de la voiture, il est éclairé partiellement et donc risque de ne pas être identifié correctement par le conducteur.

L'invention a notamment pour but d'améliorer la situation.

Elle propose notamment à cet effet un dispositif d'éclairage, conforme au préambule de la revendication 1 et correspond à l'enseignement du document WO02/04247A1.

Selon l'invention, le dispositif d'éclairage se caractérise par la partie caractérisante de la revendication 1.

Ainsi, un obstacle détecté peut être éclairé de façon sensiblement constante et sans être ébloui quel que soit son éloignement du véhicule.

L'adaptation de la largeur du faisceau lumineux permet d'optimiser la quantité d'énergie qui atteint la cible (ou obstacle détecté). Les niveaux d'éblouissement temporaire peuvent ainsi être optimisés : un faisceau étroit et intense risque en effet d'être gênant à courte distance, tandis qu'un faisceau à largeur optimisée envoie moins d'énergie et donc éblouit moins.

Le dispositif d'éclairage selon l'invention peut comporter d'autres caractéristiques qui peuvent être prises séparément ou en combinaison, et notamment :
- les moyens d'action peuvent comprendre au moins une lentille et des moyens d'entraînement agencés pour entraîner en translation cette lentille en fonction de la valeur déterminée de l'angle d'éclairement ;
   - la lentille peut être d'un type choisi parmi au moins le type biconcave, le type biconvexe, le type plan-convexe, et le type plan-concave ;

Le dispositif peut comprendre des moyens de déplacement agencés pour positionner angulairement la source en fonction d'une instruction représentative de la position relative de l'obstacle par rapport au véhicule ;
L'invention propose également un bloc optique destiné à équiper un véhicule et comprenant un dispositif d'éclairage du type de celui présenté ci-avant.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique, dans une vue du dessus, deux voies de circulation adjacentes, sur l'une desquelles circule un véhicule équipé d'un bloc optique comprenant un dispositif d'éclairage selon l'invention,
- la figure 2 illustre de façon schématique et fonctionnelle un exemple de véhicule comprenant notamment un bloc optique comportant un dispositif d'éclairage selon l'invention, et des moyens d'observation de la zone située devant lui,
- la figure 3 illustre de façon schématique, dans une vue en coupe dans un plan vertical, une partie d'un exemple de réalisation d'un dispositif d'éclairage ne faisant pas partie de l'invention,
- la figure 4 illustre de façon schématique, dans une vue en coupe dans un plan vertical, une partie d'un exemple de réalisation d'un dispositif d'éclairage selon l'invention, et
- la figure 5 illustre de façon schématique, dans une vue du dessus, deux voies de circulation adjacentes, sur l'une desquelles circule un véhicule équipé d'un bloc optique comprenant un dispositif d'éclairage du type de celui illustré sur la figure 4.

L'invention a notamment pour but de proposer un dispositif d'éclairage DE destiné à équiper un bloc optique BO d'un véhicule V et à éclairer de façon dédiée un obstacle OB détecté dans une zone située devant ce véhicule V.

Sur les figures, la direction X est la direction longitudinale du véhicule V, laquelle est sensiblement parallèle aux côtés latéraux qui comportent respectivement les portes latérales (ou portières), la direction Y est la direction transversale du véhicule V, laquelle est sensiblement perpendiculaire aux côtés latéraux, et la direction Z est la direction verticale du véhicule, laquelle est perpendiculaire aux directions longitudinale X et transversale Y.

Dans ce qui suit, on considère, à titre d'exemple non limitatif, que le bloc optique BO est destiné à équiper un véhicule automobile. Mais l'invention n'est pas limitée à ce type de véhicule. Elle concerne en effet tout type de véhicule équipé d'au moins un bloc optique comprenant un dispositif d'éclairage.

Par ailleurs, on considère dans ce qui suit, à titre d'exemple non limitatif, que le bloc optique est un phare (ou projecteur avant). Mais l'invention n'est pas limitée à ce type de bloc optique. Elle concerne également les feux arrière pour les situations où le véhicule circule en marche arrière.

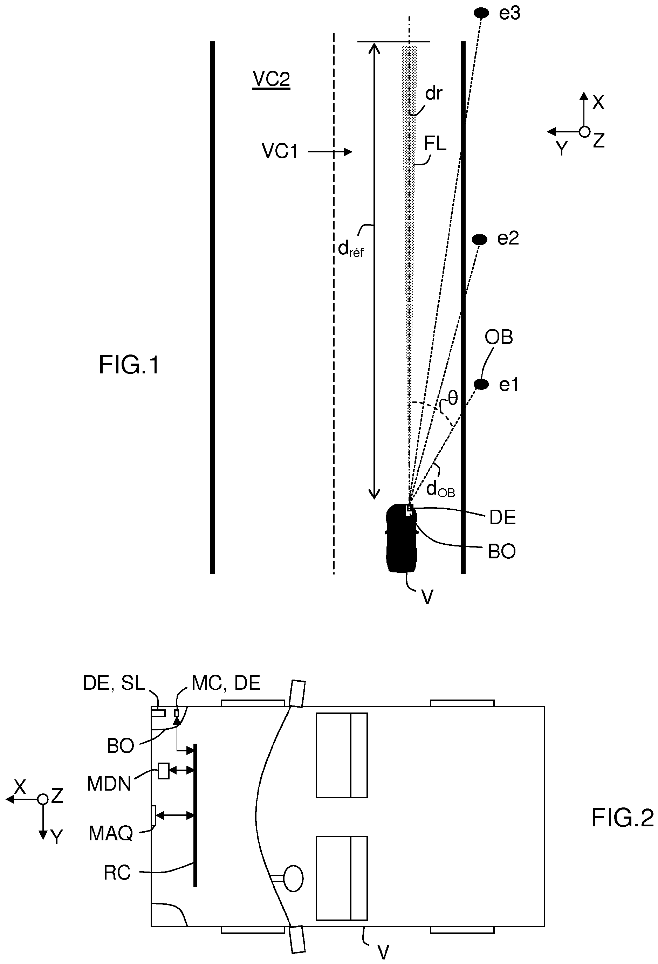

On a schématiquement illustré sur la figure 1 deux voies de circulation adjacentes VC1 et VC2. Sur la première voie de circulation VC1 circule un véhicule V équipé d'un bloc optique BO comprenant un dispositif d'éclairage DE selon l'invention.

On notera que le bloc optique BO peut être exclusivement dédié au dispositif d'éclairage DE ou bien il peut comprendre le dispositif d'éclairage DE ainsi qu'au moins un autre dispositif d'éclairage assurant au moins une fonction photométrique différente de celle concernée par l'invention (à savoir l'éclairage d'obstacles détectés devant le véhicule V).

On entend ici par « fonction photométrique » une fonction d'éclairage ou une fonction de signalisation du véhicule V ou d'un événement relatif au véhicule V ou encore une fonction lumineuse esthétique (comme par exemple une signature lumineuse).

Comme cela est mieux illustré sur la figure 2, un dispositif d'éclairage DE selon l'invention comprend au moins une source SL et des moyens de contrôle MC.

Au moins la source SL est installée dans un espace interne du bloc optique BO qui est délimité notamment par une glace et un boîtier. La glace est solidarisée fixement (par exemple par collage) et de façon étanche au boîtier. Elle peut être réalisée en matière plastique (ou synthétique) transparente ou bien en verre.

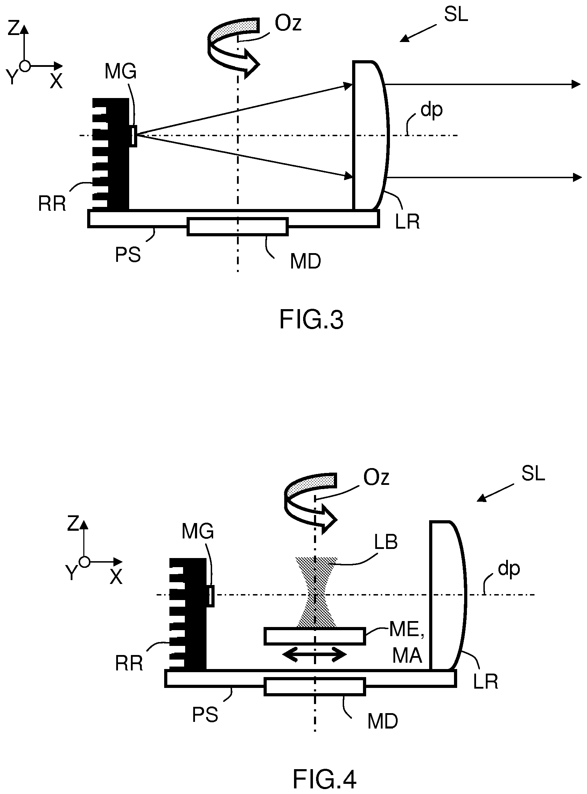

Comme illustré sur la figure 1, la source SL est propre à délivrer un faisceau lumineux FL selon une direction principale dp. Comme cela est partiellement illustré sur les exemples non limitatifs des figures 3 et 4, cette source SL comprend des moyens de génération de photons MG et au moins un circuit électronique permettant de faire varier l'alimentation électrique des moyens de génération de photons MG en fonction d'une instruction (ou commande) délivrée par les moyens de contrôle MC.

Par exemple, les moyens de génération de photons MG peuvent comporter au moins une diode électroluminescente (ou LED). En variante, ils peuvent comporter au moins une diode laser ou un laser à gaz ou encore une lampe (ou ampoule).

Comme illustré non limitativement sur les figures 3 et 4, les moyens de génération de photons MG peuvent être éventuellement montés sur un radiateur RR destiné à favoriser la dissipation des calories qu'ils produisent lorsqu'ils génèrent des photons.

On notera, comme illustré non limitativement sur les figures 3 et 4, que la source SL comprend au moins une lentille LR placée en aval des moyens de génération de photons MG (ici au moins une diode électroluminescente) par rapport au sens de propagation des photons d'éclairement qui sont délivrés par les moyens de génération de photons MG. Cette lentille LR est chargée de transformer les photons en un faisceau lumineux FL destiné à éclairer un obstacle OB détecté.

Par ailleurs, cette lentille LR est préférentiellement réalisée dans une matière transparente. Par exemple, elle peut être réalisée dans une matière plastique synthétique, telle que le polyacrylate qui offre l'avantage d'offrir de bonnes propriétés optiques (notamment une bonne transparence) et mécaniques (notamment une bonne rigidité).

Les moyens de contrôle MC interviennent lorsqu'un obstacle OB, comme par exemple et non limitativement un piéton, a été détecté en un endroit ej d'une zone qui est située devant le véhicule V.

Cette détection peut être réalisée par des moyens de détection MDN en fonction de données numériques acquises par des moyens d'acquisition MA installés en des endroits choisis du véhicule V (ici dans sa partie avant). Ces moyens d'acquisition MAQ peuvent, par exemple, comprendre au moins une caméra vidéo ou infrarouge ou au moins un radar ou au moins un laser scanner ou au moins un lidar. Par exemple et comme illustré non limitativement sur la figure 2, les moyens d'acquisition MAQ peuvent être implantés dans le bouclier ou pare-chocs avant du véhicule V, ou dans une partie haute du pare-brise, ou encore dans le bloc optique BO lui-même.

Ces moyens d'acquisition MAQ peuvent, par exemple, communiquer les données numériques acquises aux moyens de détection MDN soit directement, soit indirectement via un réseau de communication RC embarqué dans le véhicule V comme illustré non limitativement sur la figure 2.

Les moyens de détection MDN du véhicule V sont chargés d'analyser les données numériques acquises par les moyens d'acquisition MAQ, afin de détecter la présence d'obstacle(s) OB (ici devant le véhicule V). Si les moyens de détection MDN détectent un tel obstacle OB, ils en informent les moyens de contrôle MC. Ces moyens de détection MDN peuvent faire partie d'un calculateur ou bien ils peuvent constituer un équipement électronique embarqué. Par conséquent, les moyens de détection MDN peuvent être réalisés sous la forme de modules logiciels ou bien d'une combinaison de circuits électroniques et de modules logiciels.

De même, les moyens de contrôle MC peuvent faire partie d'un calculateur ou bien ils peuvent constituer un équipement électronique embarqué. Par conséquent, les moyens de contrôle MC peuvent être réalisés sous la forme de modules logiciels ou bien d'une combinaison de circuits électroniques et de modules logiciels.

On notera que dans l'exemple non limitatif illustré sur la figure 2 les moyens de détection MDN sont physiquement séparés des moyens de contrôle MC. Mais cela n'est pas obligatoire. Ils pourraient en effet faire partie d'un même calculateur.

On notera également que les moyens d'acquisition MAQ et/ou les moyens de détection MDN peuvent éventuellement faire partie du dispositif d'éclairage DE. Mais ce n'est pas obligatoire. En effet, ils pourraient faire partie d'un dispositif d'observation embarqué dans le véhicule V et assurant au moins une autre fonction au sein de ce dernier (V), comme par exemple la détection de véhicules en amont du véhicule V pour un système de régulation de vitesse ou la détection de lignes pour un système de recentrage dans la voie de circulation.

Les moyens de contrôle MC sont agencés, en cas de détection d'un obstacle OB en un endroit ej d'une zone située devant le véhicule V, pour faire varier l'alimentation électrique de la source SL en fonction d'une position relative d'un obstacle OB détecté par rapport au véhicule V, de sorte qu'elle produise un faisceau lumineux FL éclairant cet obstacle OB détecté et que cet éclairement soit sensiblement constant quelle que soit cette position relative.

On comprendra que pour ce faire les moyens de contrôle MC font varier l'alimentation électrique des moyens de génération de photons MG de la source SL en adressant au circuit électronique associé une instruction (ou commande). Par exemple, on peut faire varier l'intensité du courant électrique alimentant les moyens de génération de photons MG de la source SL.

Selon un exemple de réalisation qui ne fait cependant pas partie de la présente invention, l'intensité du courant électrique peut être déterminée par les moyens de contrôle MC, pour un obstacle OB détecté à une distance d_{OB} du véhicule V, de sorte qu'elle induise un éclairement de cet obstacle OB défini par une première loi E = E(d_{réf})((d_{réf})/d_{OB})², où E(dréf) est un éclairement de référence prédéfini et d_{réf} est une distance de référence prédéfinie. Par exemple, cette distance de référence d_{réf} peut être égale à 25 m. Dans ce cas, l'éclairement typique à 25 m (E(d_{réf})) peut être d'environ 112 lux (ce qui correspond à une intensité d'environ 70000 cd).

On a schématiquement représenté sur la figure 1 trois endroits ej (j = 1 à 3) où sont positionnés à titre d'exemple des obstacles OB détectés par les moyens de détection MDN en fonction des données numériques « d'observation » acquises par les moyens d'acquisition MAQ dans la zone située devant le véhicule V. Ces trois endroits ej sont ici situés à droite de la première voie de circulation VC1 sur laquelle circule le véhicule V. La distance séparant chaque endroit ej d'un point de référence du véhicule V est représentée par la droite référencée d_{OB}. Par ailleurs, la position angulaire d'un obstacle détecté OB par rapport à une direction de référence dr (fixe par rapport au véhicule V) est définie par un angle θ qui sépare la droite d_{OB} de la direction de référence dr. Par exemple, cette direction de référence dr est parallèle à la direction de déplacement du véhicule V, laquelle est ici parallèle à la direction longitudinale X, et est confondue avec la direction principale dp du faisceau lumineux FL lorsque ce dernier (FL) éclaire un objet situé droit devant le bloc optique BO. La position relative d'un obstacle détecté OB par rapport au véhicule V est donc définie par l'angle θ et la droite d_{OB}.

Pour qu'un obstacle détecté OB puisse être éclairé par le faisceau lumineux FL quelle que soit sa position relative, le dispositif d'éclairement DE doit comprendre des moyens de déplacement MD. Ces derniers (MD) peuvent, comme illustré sur les figures 3 et 4, être agencés pour positionner angulairement la source SL (et notamment au moins ses moyens de génération de photons MG et son éventuelle lentille LR associée) en fonction d'une instruction fournie par les moyens de contrôle MC et représentative de la position relative de l'obstacle détecté OB par rapport au véhicule V. Dans ce cas, on peut, par exemple et comme illustré non limitativement sur les figures 3 et 4, solidariser fixement les moyens de génération de photons MG et l'éventuelle lentille LR associée sur une platine de support PS, et solidariser fixement cette dernière (PS) à une pièce qui est entraînée en rotation autour d'un axe Oz par un moteur électrique des moyens de déplacement MD. Ce moteur électrique peut être, par exemple, de type pas à pas.

On notera que le dispositif d'éclairage DE comprend, comme illustré sur la figure des moyens d'action MA agencés pour faire varier un angle d'éclairement α du faisceau lumineux FL. Cet angle d'éclairement α définit la divergence angulaire (ou largeur) du faisceau lumineux FL par rapport à sa direction principale (ou centrale) dp. Par exemple, lorsqu'il est égal à 5° cela signifie que la divergence angulaire (ou largeur) du faisceau lumineux FL est égale à 2,5° de part et d'autre de sa direction principale (ou centrale) dp. De préférence la valeur de l'angle d'éclairement α varie entre environ 3° et environ 10°.

Les moyens de contrôle MC sont agencés pour déterminer la valeur de l'angle d'éclairement α en fonction de la position angulaire (θ, d_{OB}) de l'obstacle détecté OB par rapport à la direction de référence dr du faisceau lumineux FL. Les moyens de contrôle MC sont également agencés pour contrôler les moyens d'action MA de sorte qu'ils induisent un angle d'éclairement α du faisceau lumineux FL égal à cette valeur déterminée.

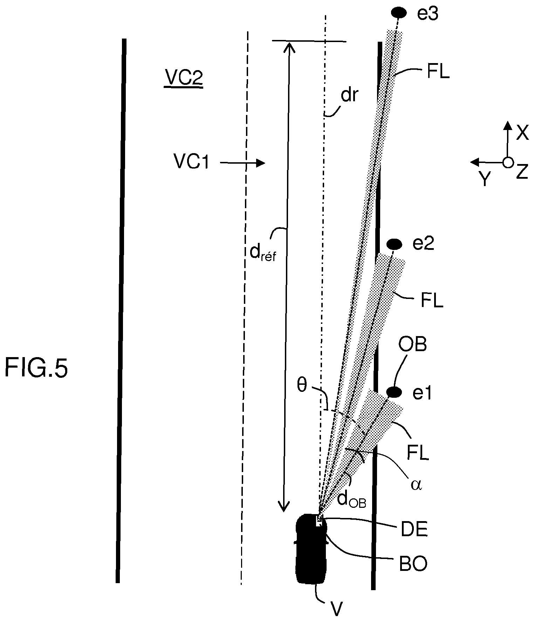

On a schématiquement représenté sur la figure 5 trois faisceaux lumineux FL ayant trois valeurs différentes d'angle (ou largeur) d'éclairement α pour trois obstacles OB détectés en trois endroits ej différents (j = 1 à 3). Comme on peut le constater, plus l'angle θ est grand, plus la valeur de l'angle d'éclairement α est grande. L'adaptation de la largeur du faisceau lumineux FL permet la création d'une zone de marquage fine et intense à grande distance, et large et moins éblouissante à des emplacements proches du véhicule V. Cela permet au conducteur de détecter plus facilement un obstacle OB (comme par exemple un piéton) qui est situé à proximité de son véhicule V sous un angle θ important, sans que cet obstacle OB ne soit ébloui.

Pour faire varier la valeur de l'angle d'éclairement α en fonction de la position angulaire de l'obstacle, les moyens d'action MA peuvent, comme illustré sur la figure 4, comprendre au moins une lentille LB et des moyens d'entraînement ME agencés pour entraîner en translation cette lentille LB en fonction de la valeur déterminée de l'angle d'éclairement α.

Par exemple, cette lentille LB peut être d'un type choisi parmi au moins le type biconcave, le type biconvexe, le type plan-convexe, et le type plan-concave.

La lentille LB peut, par exemple, être solidarisée fixement à une pièce qui est entraînée en translation par un moteur électrique des moyens d'entraînement ME. Ce moteur électrique peut être, par exemple, de type pas à pas.

Par ailleurs, cette lentille LB est préférentiellement réalisée dans une matière transparente. Par exemple, elle peut être réalisée dans une matière plastique synthétique, telle que le polyacrylate qui offre l'avantage d'offrir de bonnes propriétés optiques (notamment une bonne transparence) et mécaniques (notamment une bonne rigidité).

Pour maintenir un éclairement constant d'un obstacle OB détecté à une distance d_{OB} du véhicule V quelle que soit la distance d_{OB}, tout en faisant varier la valeur de l'angle d'éclairement α en fonction de la position angulaire de cet obstacle OB, l'intensité du courant électrique peut être déterminée par les moyens de contrôle MC de sorte qu'elle induise un éclairement de cet obstacle OB avant variation de l'angle d'éclairement défini par une seconde loi E = E(d_{réf})((d_{réf}*cosθ)/d_{OB})².

Grâce à l'invention, un obstacle détecté peut être éclairé de façon sensiblement identique et sans être ébloui quel que soit son éloignement du véhicule, et l'efficacité de cette détection peut être également accrue.

## Revendications

1. Dispositif d'éclairage (DE) pour un bloc optique (BO) de véhicule (V), ledit dispositif d'éclairage (DE) comprenant au moins une diode électroluminescente (MG) propre à délivrer un faisceau lumineux (FL) et au moins une lentille (LR) placée en aval de ladite diode électroluminescente (MG) par rapport à un sens de propagation de photons d'éclairement délivrés par cette dernière (MG) et des moyens de contrôle (MC) agencés, en cas de détection d'un obstacle (OB) en un endroit d'une zone située devant ledit véhicule (V), pour faire fonctionner la diode de sorte qu'elle éclaire ledit obstacle (OB) détecté, et faire varier une alimentation électrique de la diode en fonction de la d'une position relative de l' obstacle (OB) détecté par rapport à une direction de référence (dr) du véhicule (V), **caractérisé en ce que** ledit dispositif d'éclairage comprend des moyens d'action (MA) agencés pour faire varier l'angle d'éclairement (∝) dudit faisceau lumineux (FL) et lesdits moyens de contrôle (MC) sont agencés pour contrôler lesdits moyens d'action (MA) de sorte qu'ils induisent un angle d'éclairement (α) dudit faisceau lumineux (FL) égal à une valeur déterminée, et
**en ce que** lesdits moyens de contrôle (MC) sont agencés pour déterminer l'alimentation électrique de la diode de sorte qu'elle induise un éclairement de l'obstacle (OB) avant variation de l'angle d'éclairement (∝) défini par une loi E = E(d_{réf})((d_{réf}*cosθ)/d_{OB})², où E(d_{réf}) est un éclairement de référence prédéfini, d_{réf} est une distance de référence prédéfinie, d_{OB} est la distance séparant ledit véhicule (V) dudit obstacle (OB) et θ est l' angle représentatif de ladite position angulaire de l'obstacle (OB) par rapport à ladite direction de référence (dr), et ensuite déterminer une valeur dudit angle d'éclairement de sorte que l'éclairement dudit obstacle (OB) par ledit faisceau lumineux (FL) soit sensiblement constant quelle que soit la position relative de l'obstacle (OB) détecté par rapport au véhicule.

2. Dispositif d'éclairage selon la revendication 1, **caractérisé en ce que** lesdits moyens d'action (MA) comprennent au moins une lentille (LB) et des moyens d'entraînement (ME) agencés pour entraîner en translation ladite lentille (LB) en fonction de ladite valeur déterminée de l'angle d'éclairement.

3. Dispositif d'éclairage selon la revendication 2, **caractérisé en ce que** ladite lentille (LB) est d'un type choisi dans un groupe comprenant le type biconcave, le type biconvexe, le type plan-convexe, et le type plan-concave.

4. Dispositif d'éclairage selon l'une des revendications 1 à 3, **caractérisé en ce qu'**il comprend des moyens de déplacement (MD) agencés pour positionner angulairement ladite source (SL) en fonction d'une instruction représentative de ladite position relative de l'obstacle (OB) par rapport audit véhicule (V).

5. Bloc optique (BO) propre à équiper un véhicule (V), **caractérisé en ce qu'**il comprend un dispositif d'éclairage (DE) selon l'une des revendications précédentes.

6. Véhicule (V), **caractérisé en ce qu'**il comprend au moins un bloc optique (BO) selon la revendication 5.

7. Véhicule selon la revendication 6, **caractérisé en ce qu'**il est de type automobile.

## Patentansprüche

1. Beleuchtungsvorrichtung (DE) für eine optische Einheit (BO) eines Fahrzeugs (V), wobei die Beleuchtungsvorrichtung (DE) mindestens eine Leuchtdiode (MG), die ein Lichtbündel (FL) abgeben kann, und mindestens eine Linse (LR), die in Bezug auf eine Ausbreitungsrichtung der von der Leuchtdiode (MG) abgegebenen Beleuchtungsphotonen stromabwärts der Leuchtdiode (MG) angeordnet ist, und Steuermittel (MC) umfasst, die so angeordnet sind, dass sie die Beleuchtungsphotonen der Leuchtdiode (MG) auffangen. im Falle der Erfassung eines Hindernisses (OB) an einer Stelle in einer Zone, die sich vor dem Fahrzeug (V) befindet, die Diode so zu betreiben, dass sie das erfasste Hindernis (OB) beleuchtet, und eine elektrische Versorgung der Diode in Abhängigkeit von der relativen Position des erfassten Hindernisses (OB) in Bezug auf eine Referenzrichtung (dr) des Fahrzeugs (V) zu verändern **dadurch gekennzeichnet, dass** die Beleuchtungsvorrichtung Aktionsmittel (MA) umfasst, die so angeordnet sind, dass sie den Beleuchtungswinkel (a) des Lichtstrahls (FL) verändern, und dass die Steuermittel (MC) so angeordnet sind, dass sie die Aktionsmittel (MA) so steuern, dass sie einen Beleuchtungswinkel (a) des Lichtstrahls (FL) induzieren, der gleich einem und dass die Steuermittel (MC) angeordnet sind, um die Stromversorgung der Diode so zu bestimmen, dass sie eine Beleuchtung des Hindernisses (OB) vor der Änderung des Beleuchtungswinkels (a) induziert, der durch ein Gesetz E = E(dref)((dref^{∗}cosθ)/dOB)2 wobei E(dref) eine vordefinierte Referenzbeleuchtung ist, dref eine vordefinierte Referenzdistanz ist, dOB die Distanz ist, die das Fahrzeug (V) von dem Hindernis (OB) trennt, und θ der Winkel ist, der die Winkelposition des Hindernisses (OB) in Bezug auf die Referenzrichtung (dr) repräsentiert,und Bestimmen eines Wertes des Beleuchtungswinkels, so dass die Beleuchtung des Hindernisses (OB) durch den Lichtstrahl (FL) im Wesentlichen konstant ist, unabhängig von der relativen Position des Hindernisses (OB), das in Bezug auf das Fahrzeug erfasst wird

2. Beleuchtungsvorrichtung nach Anspruch 1, **dadurch gekennzeichnet, dass** die Aktionsmittel (MA) mindestens eine Linse (LB) und Antriebsmittel (ME) umfassen, die so angeordnet sind, dass sie die Linse (LB) in Abhängigkeit von dem bestimmten Wert des Beleuchtungswinkels translatorisch antreiben.

3. Beleuchtungsvorrichtung nach Anspruch 2, **dadurch gekennzeichnet, dass** die Linse (LB) von einem Typ ist, der aus einer Gruppe ausgewählt ist, die den bikonkaven Typ, den bikonvexen Typ, den plan-konvexen Typ und den plan-konkaven Typ umfasst.

4. Beleuchtungsvorrichtung nach einem der Ansprüche 1 bis 3, **dadurch gekennzeichnet, dass** sie Verstellmittel (MD) umfasst, die so angeordnet sind, dass sie die Quelle (SL) entsprechend einem Befehl, der die relative Position des Hindernisses (OB) in Bezug auf das Fahrzeug (V) darstellt, winklig positionieren.

5. Optische Einheit (BO), die zur Ausstattung eines Fahrzeugs (V) geeignet ist, **dadurch gekennzeichnet, dass** sie eine Beleuchtungseinrichtung (DE) nach einem der vorhergehenden Ansprüche umfasst.

6. Fahrzeug (V), **dadurch gekennzeichnet, dass** es mindestens eine optische Einheit (BO) nach Anspruch 5 umfasst.

7. Fahrzeug nach Anspruch 6, **dadurch gekennzeichnet, dass** es von der Art eines Automobils ist.

## Claims

1. Lighting device (DE) for an optical unit (BO) of a vehicle (V), said lighting device (DE) comprising at least one light-emitting diode (MG) capable of delivering a light beam (FL) and at least one lens (LR) placed downstream of said light-emitting diode (MG) with respect to a direction of propagation of illumination photons delivered by the latter (MG), and control means (MC) arranged in the event of detection of an obstacle (OB) at a location in a zone situated in front of said vehicle (V), to operate the diode so that it illuminates said detected obstacle (OB), and to vary an electrical supply to the diode as a function of the relative position of the detected obstacle (OB) with respect to a reference direction (dr) of the vehicle (V), **characterized in that** said lighting device comprises action means (MA) arranged to vary the illumination angle (a) of said light beam (FL) and said control means (MC) are arranged to control said action means (MA) so that they induce an illumination angle (a) of said light beam (FL) equal to a and **in that** said control means (MC) are arranged to determine the power supply to the diode so that it induces an illumination of the obstacle (OB) before variation of the illumination angle (a) defined by a law E = E(dref)((dref^{∗}cosθ)/dOB)2, where E(dref) is a predefined reference illumination dref is a predefined reference distance, dOB is the distance separating said vehicle (V) from said obstacle (OB) and θ is the angle representative of said angular position of the obstacle (OB) with respect to said reference direction (dr),and to determine a value of said illumination angle so that the illumination of said obstacle (OB) by said light beam (FL) is substantially constant regardless of the relative position of the obstacle (OB) detected with respect to the vehicle

2. Lighting device according to claim 1, **characterized in that** said action means (MA) comprise at least one lens (LB) and drive means (ME) arranged to drive said lens (LB) in translation as a function of said determined value of the illumination angle.

3. The lighting device according to claim 2, **characterized in that** said lens (LB) is of a type selected from a group comprising the biconcave type, the biconvex type, the plano-convex type, and the plano-concave type.

4. Lighting device according to one of claims 1 to 3, **characterized in that** it comprises displacement means (MD) arranged to angularly position said source (SL) according to an instruction representative of said relative position of the obstacle (OB) with respect to said vehicle (V).

5. Optical unit (BO) suitable for equipping a vehicle (V), **characterized in that** it comprises α lighting device (DE) according to one of the preceding claims.

6. Vehicle (V), **characterized in that** it comprises at least one optical unit (BO) according to claim 5.

7. Vehicle according to claim 6, **characterized in that** it is of the automobile type.
